# EUROPÄISCHE PATENTANMELDUNG

(11) **EP 3 078 869 A1**
(43) Veröffentlichungstag der Anmeldung: **12.10.2016**
(21) Anmeldenummer: 15001008.0
(22) Anmeldetag: 09.04.2015
(51) Int. Cl.: F16C 33/40, F16C 33/48, F16C 33/42, F16C 33/54

(54) **KÄFIG FÜR EIN MEHRREIHIGES WÄLZLAGER UND MEHRREIHIGES WÄLZLAGER FÜR WINDKRAFTANLAGEN**

(71) Anmelder: ThyssenKrupp AG, 45143 Essen (DE); Defontaine S.A., 85530 La Brufflère (FR)
(72) Erfinder: Philippe, Stephane, 44120 Vertou (FR)
(74) Vertreter: Loock, Jan Pieter

(57) **Zusammenfassung**

Die vorliegende Erfindung betrifft einen Käfig für ein mehrreihiges Wälzlager, insbesondere für Windkraftanlagen, mit Wälzkörpertaschen zur Aufnahme von Wälzkörpern, wobei die Wälzkörpertaschen auf mehreren, insbesondere zwei, verschiedenen Kreisbahnen angeordnet sind. Ferner betrifft die Erfindung ein mehrreihiges Wälzlager, insbesondere Großwälzlager für Windkraftanlagen, mit mehreren parallelen Wälzkörperlaufbahnen und einem vorstehend bezeichneten Käfig.

## Beschreibung

### Stand der Technik

Die vorliegende Erfindung betrifft einen Käfig für ein mehrreihiges Wälzlager, insbesondere für Windkraftanlagen, mit Wälzkörpertaschen zur Aufnahme von Wälzkörpern. Ferner betrifft die Erfindung ein mehrreihiges Wälzlager, insbesondere Großwälzlager für Windkraftanlagen, mit mehreren parallelen Wälzkörperlaufbahnen. Ein weiterer Gegenstand der Erfindung ist eine Windkraftanlage mit mindestens einem Rotorblatt.

Mehrreihige Wälzlager weisen Wälzkörper auf, die in mehreren verschiedenen Wälzkörperlaufbahnen laufen. Solche Wälzlager werden beispielsweise zur drehbaren Anbindung von Rotorblättern bei Windkraftanlagen verwendet, um durch die Einstellung des Blattwinkels eine Leistungsregelung der Windkraftanlage zu ermöglichen.

Üblicherweise sind bei solchen mehrreihigen Wälzlagern mehrere Käfige vorgesehen, die Wälzkörpertaschen zur Aufnahme von Wälzkörpern aufweisen. Jeder Wälzkörperlaufbahn ist in der Regel genau ein Käfig zugeordnet, so dass die auf einer Wälzkörperlaufbahn laufenden Wälzkörper jeweils in einem gemeinsamen Käfig aufgenommen sind. Über diese Käfige kann ein Abstand zwischen den Wälzkörpern einer Wälzkörperlaufbahn eingestellt werden, so dass verhindert wird, dass sich einzelne Wälzkörper untereinander unmittelbar berühren.

Bei derartigen Wälzlagern hat es sich als nachteilig herausgestellt, dass ein gewisser Mindestabstand zwischen benachbarten Käfigen erforderlich ist, um gegenseitige Beeinträchtigungen der Käfige zu verhindern. Dieser Mindestabstand hat eine gewisse Mindestbauhöhe des mehrreihigen Wälzlagers zur Folge, welche zu einem erhöhten Materialeinsatz und damit auch zu einem erhöhten Gewicht des Wälzlagers führt.

### Offenbarung der Erfindung

Die Aufgabe der vorliegenden Erfindung ist es, die Bauhöhe und das Gewicht mehrreihiger Wälzlager zu reduzieren.

Bei einem Käfig der eingangs genannten Art wird die Aufgabe dadurch gelöst, dass die Wälzkörpertaschen auf mehreren, insbesondere zwei, verschiedenen Kreisbahnen angeordnet sind.

In den Wälzkörpertaschen der mehreren, insbesondere zwei, Kreisbahnen des Käfigs können Wälzkörper aufgenommen werden, die in verschiedenen Wälzkörperlaufbahnen eines Wälzlagers laufen. Somit kann ein gemeinsamer Käfig für die auf den verschiedenen Wälzkörperlaufbahnen laufenden Wälzkörper bereitgestellt werden. Es ist nicht erforderlich, mehrere Käfige in einem Wälzlager vorzusehen, wodurch das Erfordernis eines Mindestabstands zwischen den Käfigen entfällt und die Ausbildung eines kompakten, mehrreihigen Wälzlagers mit reduziertem Gewicht ermöglicht wird.

Bevorzugt sind die Wälzkörpertaschen auf zwei Kreisbahnen angeordnet. Alternativ können die Wälzkörpertaschen auf drei, vier, fünf, sechs oder mehr Kreisbahnen angeordnet sein.

Eine vorteilhafte Ausgestaltung sieht vor, dass die Kreisbahnen parallel verlaufend angeordnet sind, so dass der Aufbau zwei- oder mehrreihiger Wälzlager mit parallelen Wälzkörperlaufbahnen unter Verwendung nur eines Käfigs ermöglicht wird.

Vorteilhaft ist es ferner, wenn die Kreisbahnen in Richtung einer Rotationsache des Käfigs voneinander beabstandet angeordnet sind.

Bevorzugt ist eine Ausgestaltung, bei welcher die Wälzkörpertaschen zweier benachbarter Kreisbahnen versetzt zueinander angeordnet sind. Durch den Versatz der Wälzkörpertaschen zweier benachbarter Kreisbahnen kann die Variation der Steifheit des Käfigs entlang des Käfigumfangs reduziert werden. Im Vergleich zu einem Käfig mit Wälzkörpertaschen, die auf einer einzigen Kreisbahn angeordnet sind, ergibt sich eine gleichmäßigere Steifheit des Käfigs entlang der Umfangsrichtung. Zudem ergibt sich der Vorteil, dass der Abstand der beiden Kreisbahnen aufgrund des Versatzes reduziert werden kann, ohne dass eine Verschlechterung der Steifigkeit des Käfigs befürchtet werden muss. Besonders bevorzugt sind die Wälzkörpertaschen zweier benachbarter Kreisbahnen derart versetzt, dass eine Wälzkörpertasche einer ersten Kreisbahn auf einer Lotrechten zu einer gedachte Verbindungslinie zwischen zwei Wälzkörpertaschen einer zweiten Kreisbahn angeordnet ist, wobei die Lotrechte die Verbindungslinie im Bereich der Mitte der Verbindungslinie schneidet.

Als vorteilhaft hat sich eine Ausgestaltung erwiesen, bei welcher die Wälzkörpertaschen einer ersten Kreisbahn und einer zu der ersten Kreisbahn benachbarten zweiten Kreisbahn denselben Abstand voneinander aufweisen und wobei die Wälzkörpertaschen der ersten Kreisbahn um die Hälfte des Abstands gegenüber den Wälzkörpertaschen der zweiten Kreisbahn versetzt angeordnet sind. Bei einer derartigen Anordnung der Wälzkörpertaschen nach Art eines Zick-Zack-Musters ergibt sich eine besonders gleichmäßige Verteilung der Wälzkörpertaschen über den Käfig, was eine besonders gleichmäßige Steifigkeitsverteilung zur Folge hat. Zudem können die Wälzkörpertaschen dichter gepackt werden, was die Kompaktheit des Käfigs und/oder des Wälzlagers nochmals verbessert.

Bevorzugt ist es, wenn die Wälzkörpertaschen als Ausnehmungen in einem Grundkörper des Käfigs ausgebildet sind. Die Ausnehmungen sind vorteilhafterweise rund, so dass kugelförmige Wälzkörper aufgenommen werden können.

Vorteilhaft ist es ferner, wenn der Käfig ringförmig ausgebildet ist. Konstruktiv vorteilhaft ist eine zylinderringförmige Ausgestaltung des Käfigs.

Als vorteilhaft hat es sich ferner erwiesen, wenn der der Käfig einstückig ausgebildet ist, so dass sich eine besonders hohe Stabilität, Tragfestigkeit und Verwindungssteifigkeit ergibt.

Der Käfig weist bevorzugt einen Durchmesser im Bereich von 1 m bis 10 m, bevorzugt von 3 m bis 7 m, besonders bevorzugt von 4 m bis 6 m auf, so dass er in einem Großwälzlager für eine Windkraftanlage Verwendung finden kann.

Bei einem mehrreihigen Wälzlager, insbesondere Großwälzlager, der eingangs genannten Art trägt es zur Lösung der Aufgabe bei, dass das Wälzlager einen vorstehend beschriebenen Käfig aufweist.

Im Hinblick auf eine Windkraftanlage der eingangs genannten Art wird die Aufgabe dadurch gelöst, dass das Rotorblatt über ein vorstehend genanntes Wälzlager drehbar vorgesehen ist.

Bei dem erfindungsgemäßen Wälzlager und der Windkraftanlage ergeben sich die dieselben Vorteile wie sie bereits im Zusammenhang mit dem Käfig beschrieben worden sind.

Eine vorteilhafte Ausgestaltung des Wälzlagers sieht vor, dass die Wälzkörper als Kugeln ausgebildet sind. Alternativ können die Wälzkörper als Rollen, insbesondere Zylinderrollen, Kegel, Tonnen oder Nadeln ausgebildet sein.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die Figur 1 zeigt ein Ausführungsbeispiel einer Windkraftanlage gemäß der Erfindung in einer Frontalansicht.

Die Figur 2 zeigt ein Ausführungsbeispiel eines Käfigs gemäß der Erfindung in einer perspektivischen Darstellung.

Die Figur 3 zeigt ein Ausführungsbeispiel eines Wälzlagers gemäß der Erfindung in einer perspektivischen Darstellung, wobei zur besseren Sichtbarkeit des Käfigs der Innenring nicht gezeichnet ist.

Die Figur 4 zeigt die Anordnung der Wälzkörpertaschen an dem Käfig gemäß Figur 2 in einer schematischen Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

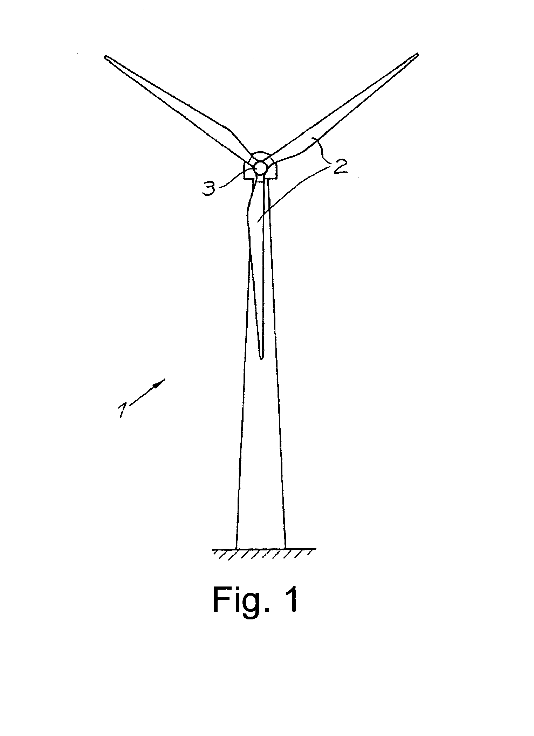

In der Figur 1 ist eine Windkraftanlage 1 gezeigt, die einen auf einem Turm angeordneten Rotor 2 aufweist. Der Rotor 2 ist über ein Azimut-Lager gegenüber dem Turm in Azimut drehbar gelagert. An dem Rotor 2 sind mehrere Rotorblätter 3 vorgesehen, welche zur Einstellung des Blattwinkels der einzelnen Rotorblätter 3 über Blattlager drehbar an dem Rotor gelagert sind.

Das Azimut-Lager und die Blattlager sind als Großwälzlager mit einem Durchmesser im Bereich von 1 m bis 10 m, bevorzugt von 3 m bis 7 m, besonders bevorzugt von 4 m bis 6 m ausgebildet. Nachfolgend soll ein Blattlager beschrieben werden, welches die Rotorblätter 3 mit dem Rotor 2 drehbar verbindet. Alternativ oder zusätzlich ist es möglich, ein Azimut-Lager der Windkraftanlage 1 wie nachfolgend beschrieben auszubilden.

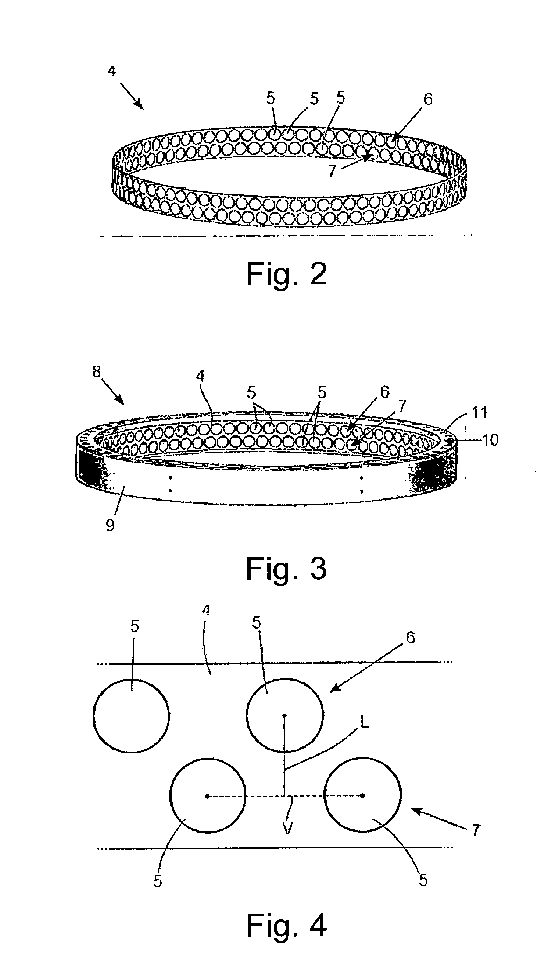

Die Figur 2 zeigt einen Käfig 4 des als Großwälzlagers ausgebildeten Wälzlagers 8, welcher einen zylinderringförmigen Grundkörper aufweist. Bei dem Grundkörper handelt es sich um einen einstückig ausgebildeten zylindrischen Ring mit einem Durchmesser im Bereich von 1 m bis 10 m, bevorzugt von 3 m bis 7 m, besonders bevorzugt von 4 m bis 6 m.

In der Figur 3 ist ein Wälzlager 8 mit einem Außenring 9 und einem gegenüber dem Außenring 9 um eine Drehachse drehbaren Innenring dargestellt, wobei zur Verbesserung der Sichtbarkeit des Käfigs 4 der Innenring des Wälzlagers nicht abgebildet ist. Bei dem Wälzlager 8 kann es sich beispielsweise um ein Vierpunktlager handeln. Der Außenring 9 weist einen Flansch 10 mit mehreren Öffnungen 11 auf, in welche Verbindungsmittel eingebracht werden können, um das Wälzlager 8 mit dem Rotor 2 oder dem Rotorblatt 3 zu verbinden.

Das Wälzlager 8 ist zweireihig ausgebildet und weist somit zwei Wälzkörperlaufbahnen auf, in welchen, insbesondere kugelförmige, Wälzkörper laufen. Die Wälzkörper sind innerhalb von Wälzkörpertaschen 5 aufgenommen, in welchen die Wälzkörper voneinander beabstandet in der Wälzkörperlaufbahn geführt werden. Die Wälzkörpertaschen 5 sind als, insbesondere kreisförmige, Ausnehmungen in dem Grundkörper des Käfigs 4 ausgestaltet. Insofern ergibt sich ein Käfig 4 nach Art eines zylindrischen Lochblechs.

Um eine möglichst mit einem geringen Gewicht verbundene, kompakte Ausgestaltung des Wälzlagers 8 zu ermöglichen, ist ein gemeinsamer Käfig 4 zur Aufnahme sämtlicher Wälzkörper des Wälzlagers 8 vorgesehen. Der Käfig 4 weist eine Vielzahl an Wälzkörpertaschen 5 auf, wobei die Wälzkörpertaschen 5, insbesondere die Mittelpunkte der Wälzkörpertaschen 5, auf zwei Kreisbahnen 6, 7 angeordnet sind. Die beiden Kreisbahnen 6, 7, sind parallel verlaufend in dem Käfig 4 vorgesehen. Insofern weisen die Kreisbahnen 6, 7 in Richtung der Rotationsachse des Wälzlagers 8 einen vorgegeben Abstand auf.

Wie nachfolgend anhand der schematischen Detaildarstellung in der Figur 4 erläutert werden soll, sind die Wälzkörpertaschen 5 der beiden benachbarten Kreisbahnen 6, 7 versetzt zueinander angeordnet. Der Versatz der Wälzkörpertaschen 5 ist so gewählt, dass eine Wälzkörpertasche 5 einer ersten Kreisbahn 6 auf einer Lotrechten L zu einer gedachten Verbindungslinie V zwischen zwei Wälzkörpertaschen 5 einer zweiten Kreisbahn 7 angeordnet ist, wobei die Lotrechte L die Verbindungslinie V im Bereich der Mitte der Verbindungslinie V schneidet. Die Mitte der Verbindunglinie V liegt auf halbem Weg zwischen den Mittelpunkten zweier benachbarter Wälzkörpertaschen 5 der zweiten Kreisbahn 7. Die auf der ersten Kreisbahn 6 liegenden Wälzkörpertaschen 5 und die auf der zweiten Kreisbahn 7 liegenden Wälzkörpertaschen 5 weisen jeweils einen identischen Abstand voneinander auf. Bei dem Ausführungsbeispiel ergibt sich ein Versatz der Wälzkörpertaschen 5 der ersten Kreisbahn 6 gegenüber den Wälzkörpertaschen der zweiten Kreisbahn 7 um die Hälfte des Abstands der Wälzkörpertaschen 5.

Die vorstehend beschriebene Windkraftanlage 1 weist ein mehrreihiges Wälzlager 8 zur drehbaren Anbindung eines Rotorblatts 3 auf, welches mehreren parallel Wälzkörperlaufbahnen umfasst. Teil des Wälzlager 8 ist ein Käfig 4 mit Wälzkörpertaschen 5 zur Aufnahme von Wälzkörpern, wobei die Wälzkörpertaschen 5 auf mehreren verschiedenen Kreisbahnen 6, 7 angeordnet sind. Hierdurch wird eine gewichtsreduzierte, kompakte Ausgestaltung des Wälzlagers 8 ermöglicht.

### Bezugszeichenliste

- 1: Windkraftanlage
- 2: Rotor
- 3: Rotorblatt
- 4: Käfig
- 5: Wälzkörpertasche
- 6: Kreisbahn
- 7: Kreisbahn
- 8: Wälzlager
- 9: Außenring
- 10: Flansch
- 11: Öffnung

- L: Lotrechte
- H: Höhe
- V: Verbindungslinie

## Patentansprüche

1. Käfig für ein mehrreihiges Wälzlager (8), insbesondere für Windkraftanlagen (1), mit Wälzkörpertaschen (5) zur Aufnahme von Wälzkörpern,
**dadurch gekennzeichnet, dass**
die Wälzkörpertaschen (5) auf mehreren, insbesondere zwei, verschiedenen Kreisbahnen (6, 7) angeordnet sind.

2. Käfig nach Anspruch 1, wobei die Kreisbahnen (6, 7) parallel verlaufend angeordnet sind.

3. Käfig nach einem der vorhergehenden Ansprüche, wobei die Kreisbahnen (6, 7) in Richtung einer Rotationsache des Käfigs (4) voneinander beabstandet angeordnet sind.

4. Käfig nach einem der vorhergehenden Ansprüche, wobei die Wälzkörpertaschen (5) zweier benachbarter Kreisbahnen (6, 7) versetzt zueinander angeordnet sind, insbesondere derart, dass eine Wälzkörpertasche (5) einer ersten Kreisbahn (6) auf einer Lotrechten (L) zu einer gedachten Verbindungslinie (V) zwischen zwei Wälzkörpertaschen (5) einer zweiten Kreisbahn (7) angeordnet ist, wobei die Lotrechte (L) die Verbindungslinie (V) im Bereich der Mitte der Verbindungslinie (V) schneidet.

5. Käfig nach einem der vorhergehenden Ansprüche, wobei die Wälzkörpertaschen (5) einer ersten Kreisbahn (6) und einer zu der ersten Kreisbahn (6) benachbarten zweiten Kreisbahn (7) denselben Abstand voneinander aufweisen und wobei die Wälzkörpertaschen (5) der ersten Kreisbahn (6) um die Hälfte des Abstands gegenüber den Wälzkörpertaschen (5) der zweiten Kreisbahn (7) versetzt angeordnet sind.

6. Käfig nach einem der vorhergehenden Ansprüche, wobei die Wälzkörpertaschen (5) als runde Ausnehmungen in einem Grundkörper des Käfigs (4) ausgebildet sind.

7. Käfig nach einem der vorhergehenden Ansprüche, wobei der Käfig (4) ringförmig, insbesondere zylinderringförmig, ausgebildet ist.

8. Käfig nach einem der vorhergehenden Ansprüche, wobei der Käfig (4) einstückig ausgebildet ist.

9. Käfig nach einem der vorhergehenden Ansprüche, wobei der Käfig (4) einen Durchmesser im Bereich von 1 m bis 10 m, bevorzugt von 3 m bis 7 m, besonders bevorzugt von 4 m bis 6 m aufweist.

10. Mehrreihiges Wälzlager, insbesondere Großwälzlager für Windkraftanlagen (1), mit mehreren parallelen Wälzkörperlaufbahnen, **dadurch gekennzeichnet, dass** das Wälzlager (8) einen Käfig (4) nach einem der vorhergehenden Ansprüche aufweist.

11. Wälzlager nach Anspruch 10, wobei die Wälzkörper als Kugeln ausgebildet sind.

12. Windkraftanlage mit mindestens einem Rotorblatt, **dadurch gekennzeichnet, dass** das Rotorblatt (3) über ein Wälzlager (8) nach einem der Ansprüche 10 oder 11 drehbar vorgesehen ist.
